# FASCICULE DE BREVET EUROPEEN

(11) **EP 0 504 345 B1**
(45) Date de publication et mention de la délivrance du brevet: **31.07.1996**
(21) Numéro de dépôt: 91916842.7
(22) Date de dépôt: 04.10.1991
(51) Int. Cl.: E04H 12/18, F16G 13/18, F16G 13/12, F16G 13/00

(54) **ELEMENT DE STRUCTURE TRANSFORMABLE**
VERWANDELBARES GEFÜGEELEMENT
CONVERTIBLE STRUCTURAL ELEMENT

(30) Priorité: 11.10.1990 FR 9012660
(43) Date de publication de la demande: 23.09.1992
(73) Titulaire: BRINGOLF, Serge Alain, CH-2300 La Chaux-de-Fonds (CH); ALAIN BURRI SA, CH-1231 Conches/Genève (CH)
(72) Inventeur: BRINGOLF, Serge Alain, CH-2300 La Chaux-de-Fonds (CH)
(74) Mandataire: Colas, Jean-Pierre
(86) Numéro de dépôt international: CH9100208
(87) Numéro de publication internationale: WO9207154

(56) Documents cités:
- GB-A- 1 069 880
- GB-A- 1 141 257

## Description

La présente invention concerne un élément de structure transformable et capable d'assumer une forme de poutre pour supporter une charge et/ou pour transmettre une force et/ou un couple. Cette forme peut être obtenue au gré de l'utilisateur à partir de composants de l'élément de structure ayant, lorsqu'ils ne sont pas assemblés, chacun une configuration essentiellement souple.

Un tel élément de structure peut être utilisé dans de nombreuses applications pour permettre la constitution sélective d'un élément de structure capable de supporter une charge et/ou de transmettre une force et/ou un couple, et présentant une certaine longueur, l'élément pouvant être escamoté dans un volume dont l'encombrement est très réduit par rapport à cette longueur.

Pour fixer les idées, et à titre d'exemple seulement, un tel élément peut former une hampe de drapeau d'une hauteur donnée, escamotable dans un logement prévu dans le sol, lorsque le drapeau n'est pas déployé.

Un élément de structure de ce genre a déjà été proposé dans le brevet GB 1 069 880 (FR 1 425 887).

Cet élément connu comprend une chaîne dont les maillons sont articulés entre eux et comprennent chacun un axe d'articulation et au moins une plaquette de maillon, et des moyens pour rigidifier sélectivement les articulations entre les maillons pour transformer l'élément en une structure de poutre, lesdits moyens de rigidification comprenant un lien souple (se présentant également sous la forme d'une chaîne) et portant une série d'éléments d'accrochage avec un écartement fixe entre eux et ladite plaquette d'un maillon de ladite chaîne définissant un premier point d'appui.

Dans cette réalisation antérieure, les maillons des chaînes composant l'élément de structure sont réalisés sous la forme d'étriers dont l'âme est tournée vers l'extérieur de sorte que dans sa configuration assemblée, l'élément de structure présente grosso modo une forme de caisson de section carrée ou rectangulaire.

Or, il s'est avéré que les éléments de structure assemblables dont il est question ici ont un intérêt particulier, lorsque l'on peut en assurer l'assemblage de façon mécanisée, par exemple à l'aide d'un actionneur motorisé. Une telle mécanisation de l'assemblage est très difficile à mettre en oeuvre dans la construction connue du brevet antérieur précité.

Par ailleurs, il peut être souhaitable de disposer d'éléments de structure du genre indiqué ci-dessus permettant de supporter des charges élevées sans que la poutre qu'ils constituent après l'assemblage à partir de ses deux composants, ne se déforme outre mesure ou ne se casse. Ceci revient à dire que l'on doive renforcer les maillons des chaînes formant ces composants. Dans la solution préconisée dans le brevet antérieur précité, ce renforcement de structure ne peut se faire qu'en grossissant les dimensions des chaînes ou en utilisant des épaisseurs de matière plus importantes.

L'invention a pour but de fournir un élément de structure transformable se prêtant facilement à une mécanisation de sa transformation et capable de supporter des charges importantes dans la mesure où il peut facilement être dédoublé ou davantage.

L'invention a donc pour objet un élément de structure transformable capable d'assumer une forme de poutre, comprenant une chaîne dont les maillons sont articulés entre eux et comprennent chacun un axe d'articulation et au moins une plaquette de maillon, et des moyens pour rigidifier sélectivement les articulations entre les maillons pour transformer l'élément en une structure de poutre, lesdits moyens de rigidification comprenant un lien souple portant une série d'éléments d'accrochage avec un écartement fixe entre eux et ladite plaquette d'un maillon de ladite chaîne définissant un premier point d'appui, cet élément de structure transformable étant caractérisé en ce que ladite plaquette définit également un deuxième point d'appui antagoniste au premier point d'appui, en ce que le premier point d'appui du maillon de rang n coopère avec le deuxième point d'appui du maillon du rang n-1 pour emprisonner un élément d'accrochage dudit lien souple, lorsque l'élément de structure assume sa forme de poutre, et en ce que lesdits axes d'articulation et lesdits éléments d'accrochage sont latéralement accessibles dans une direction perpendiculaire auxdits axes et auxdits éléments d'accrochage, le long des bords de ladite chaîne et dudit lien souple qui, lorsque l'élément assume sa forme de poutre, sont des bords extérieurs de celle-ci.

Grâce à ces caractéristiques, la mécanisation de l'assemblage de cet élément de structure à partir de ses composants peut être réalisée très facilement au moyen de simples roues dentées engrenant avec les axes des maillons et les éléments d'accrochage, roues dentées que l'on peut alors coupler à un dispositif motorisé.

Par ailleurs, la chaîne à maillons peut facilement être renforcée en mettant côte-à-côte plusieurs plaquettes par maillon articulé sur un même axe, le lien souple pouvant être assemblé à toutes les plaquettes de chaque maillon par un élément d'accrochage de ce lien, commun à toutes les plaquettes d'un même maillon de la chaîne.

D'autres caractéristiques et avantages de l'invention apparaîtront à la lecture de la description qui suit de modes de réalisation non limitatifs en liaison avec les dessins annexés parmi lesquels:
- la figure 1 est une vue partielle en coupe d'un élément de structure selon l'invention, dans sa configuration rigide, et dans son mode de réalisation le plus élémentaire;
- la figure 2 est une vue en coupe selon la lige II-II de la figure 1;
- la figure 3 représente un mode de réalisation préféré d'un élément de structure selon l'invention, la chaîne à maillons et le lien souple (ici également une chaîne à maillons étant représentés séparément;
- les figures 4 et 5 sont des vues de profil selon les flèches IV et V de la figure 3;
- les figures 6 et 7 montrent des vues selon les flèches VI et VII respectivement des figures 4 et 5;
- la figure 8 représente en bout l'élément assemblé;
- la figure 9 est une vue en élévation, partiellement en coupe d'un dispositif d'assemblage d'un élément de structure selon l'invention;
- la figure 10 est une vue selon la ligne X-X de la figure 9;
- la figure 11 montre l'élément de structure au cours de son assemblage à l'aide du dispositif d'assemblage;
- les figures 12 et 13 montrent schématiquement un dispositif moteur permettant d'assembler automatiquement l'élément de structure selon l'invention; et
- les figures 14 et 15 montrent à titre d'exemple deux applications pratiques de l'élément de structure suivant l'invention.

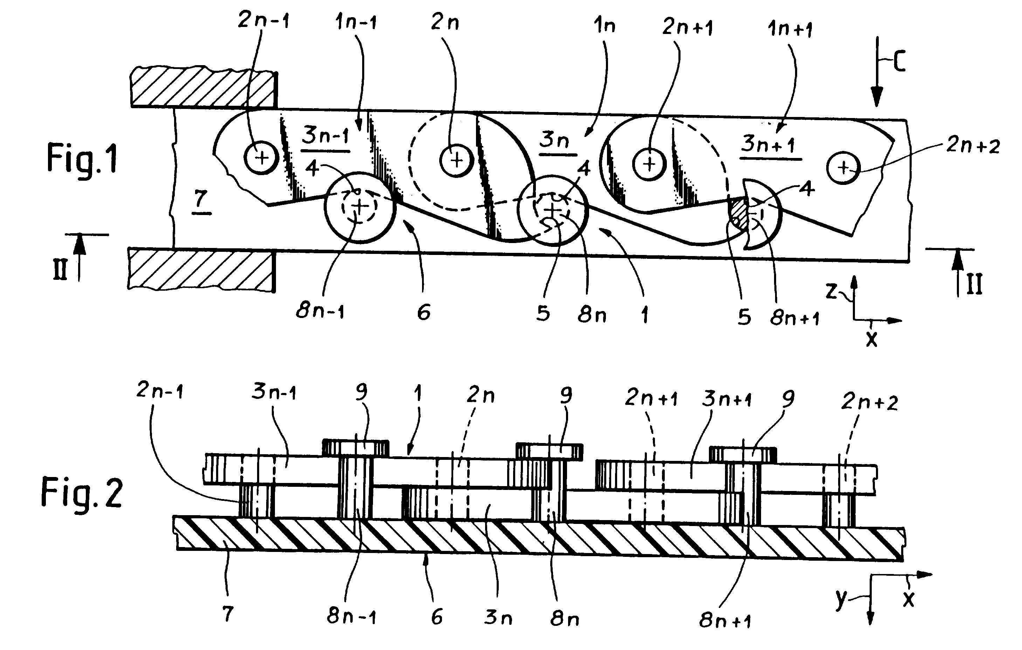

On va tout d'abord se référer aux figures 1 et 2 qui illustrent à la fois le principe de base de l'invention et son mode de réalisation le plus simple.

L'élément de structure comprend ici une chaîne à maillons 1 dont on voit représentés trois maillons, à savoir les maillons 1n-1, 1n, 1n+1 ..., la chaîne pouvant comporter autant de maillons qu'il est nécessaire.

Les maillons sont articulés entre eux a l'aide d'axes ... 2n-1, 2n, 2n+1 ... qui peuvent être réalisés de toute manière appropriée à condition de maintenir les maillons latéralement ensemble et naturellement aussi de résister aux charges qui sont imposées à l'élément une fois rigidifié . Dans le présent mode de réalisation, les axes peuvent être réalisés par exemple sous la forme d'une douille filetée intérieurement et pourvue d'une flasque radiale, cette douille recevant une vis de blocage.

Chaque maillon comporte une plaquette ... 3n-1, 3n, 3n+1 ... présentant un premier point d'appui latéral 4 prévu ici dans une dépression de l'un des flancs de la plaquette, ainsi qu'un deuxième point d'appui latéral 5 défini par une partie crochue prévue à l'une des extrémités de chaque plaquette. Comme on peut le constater sur la figure 1, lorsque l'élément de structure est assemblé, le premier point d'appui 4 d'un maillon quelconque n de la chaîne 1 est placé en regard du second point d'appui 5 du maillon de rang n-1 de la chaîne. Ainsi, les points d'appui coopérants de deux maillons successifs de la chaîne sont dans une position d'antagonisme.

L'élément de structure comprend également un lien souple 6 formé ici par une bande 7 sur laquelle sont prévus, de distance en distance, des ergots cylindriques ... 8n-1, 8n, 8n+1 ... s'étendant perpendiculairement de l'une des faces latérales de la bande, c'est-à-dire celle qui, lorsque l'élément de structure est assemblé, se trouve contiguë à la chaîne à maillons 1. Par conséquent, les axes de ces ergots s'étendent parallèlement aux axes des maillons de la chaîne 1 lorsque l'élément de structure assume sa forme en poutre. Le lien souple peut être, par exemple, une bande en caoutchouc renforcé.

Chaque ergot ... 8n-1, 8n, 8n+1 est pourvu d'un flasque d'extrémité 9 (figure 2) destiné à bloquer la chaîne latéralement après l'assemblage et ainsi à consolider l'élément de structure. La distance entre les ergots 9 est la même qu'entre les axes ... 2n-1, 2n, 2n+1 ...

D'après la description qui précède, on comprend que l'élément de structure suivant l'invention peut admettre deux configurations à savoir une configuration souple dans laquelle la chaîne 1 et le lien souple 6 sont dissociés et une autre configuration dans laquelle l'élément constitue une poutre rigide grâce à l'assemblage de ses deux composants. Dans cette configuration rigide, l'élément peut supporter une charge et/ou transmettre une force et/ou un couple.

Pour en expliquer le fonctionnement et pour faciliter la description (figures 1 et 2), on admettra que l'élément de structure est assemblé et positionné dans un système de coordonnées orthogonales x - y - z dont l'axe z est orienté verticalement, et l'axe x est dirigé selon la longueur de la poutre que constitue l'élément de structure.

Aussi bien la chaîne 1 que le lien souple 6 peuvent être enroulés, par exemple sur un tambour approprié dont ils sont déroulés pour l'assemblage de l'élément de structure. Il est évident que la chaîne 1 peut être enroulée autour d'un tambour dont l'axe est orienté selon la direction y, c'est-à-dire parallèlement à celle des axes ... 2n-1, 2n, 2n+1 ...

Quant au lien souple 6, on peut tout d'abord imaginer qu'il présente une très faible résistance mécanique dans les deux directions y et z; dans ces conditions, il peut être réalisé en une bande de matière entièrement souple. Toutefois, la poutre formée par l'élément de structure aura alors une certaine résistance mécanique uniquement dans le sens de la direction z, les forces de sollicitation C étant dirigées vers le bas. La poutre pourra donc supporter une charge pour autant qu'elle soit compatible avec la résistance de la chaîne. En revanche, si cette charge C agit en sens contraire, la poutre ne présentera aucune résistance, car l'élément de structure sera désassemblé immédiatement. On admet ici que l'élément de structure est encastré à son extrémité, comme symbolisé à gauche de la figure 1.

Toutefois, si le lien 6 n'est souple que latéralement, c'est-à-dire qu'il peut s'enrouler autour d'un tambour dont l'axe est orienté verticalement (direction z), alors l'élément de structure présentera une résistance à la flexion dans les deux sens selon la direction z, pour autant naturellement que les limites de charge ne soient pas dépassées.

On verra par la suite que dans d'autres modes de réalisation de l'invention, le lien souple 6 sera réalisé d'une autre manière pour conférer à l'élément de structure des propriétés de résistance identiques pour les deux orientations de la charge selon l'axe Z.

On constate ainsi que les ergots ... 8n-1, 8n, 8n+1 ... servent en définitive à bloquer les articulations entre les maillons de la chaîne 1.

Il est à noter que l'orientation de l'élément de structure décrite ci-dessus dans le système de coordonnées x - y - z, n'est choisie qu'à titre purement illustratif, l'élément de structure ayant des propriétés tout-à-fait analogues, quelle que soit son orientation dans l'espace.

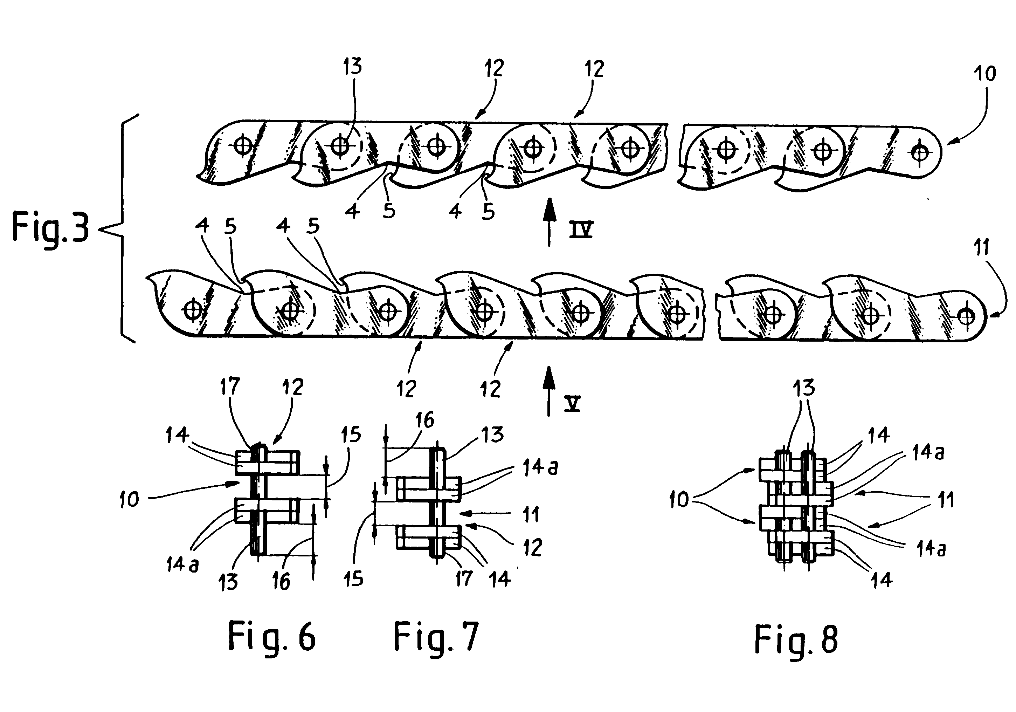

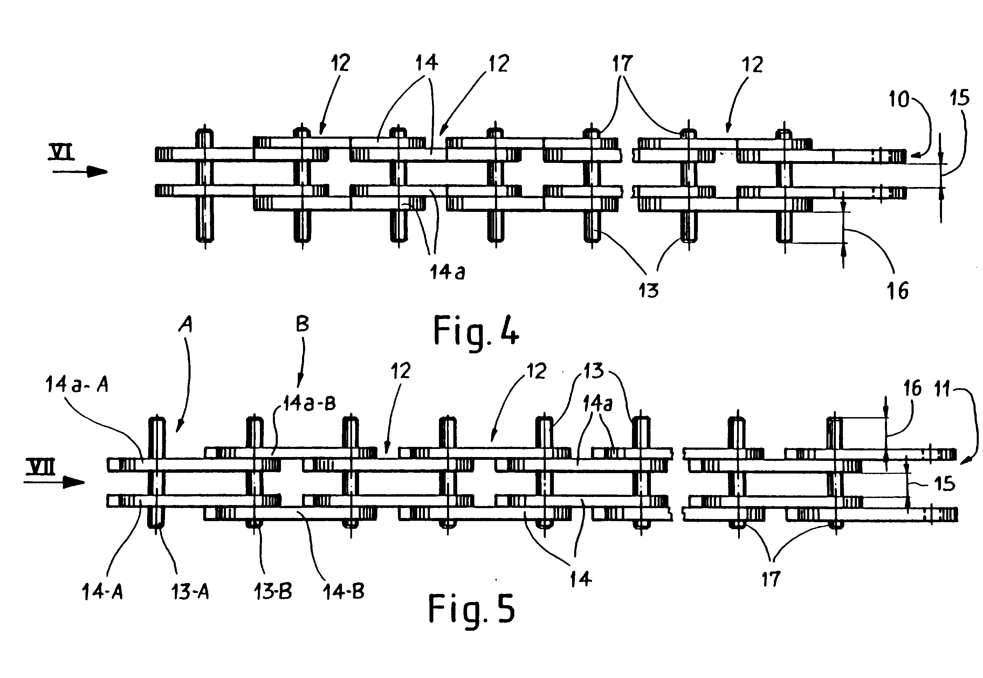

Les figures 3 à 8 représentent le mode de réalisation préféré de l'invention. Dans ce cas, l'élément de structure est également composé d'une chaîne a maillons 10 et d'un lien souple 11, cependant que ces deux composants ont exactement la même forme. En d'autres termes, le lien souple 11 est également constitué à partir d'une chaîne à maillons en tous points identiques à la chaîne 10. C'est pourquoi seule la chaîne 10 sera décrite plus en détail ci-après.

Plus précisément, la chaîne 10 comprend une succession de maillons 12 comprenant chacun un axe 13 et au moins une plaquette 14. Dans le mode de réalisation représenté, chaque plaquette 14 est dédoublée par une plaquette parallèle 14a identique, un intervalle 15 étant ménagé entre les plaquettes formant les maillons les plus étroits. Par ailleurs, chaque plaquette présente deux points d'appui 4 et 5, comme dans le mode de réalisation de figures 1 et 2.

L'intervalle 15 ménagé sur l'axe de chaque chaîne à maillons 10 ou Il est égal à l'épaisseur de deux plaquettes 14 ou 14a si bien que lorsque les deux chaînes sont assemblées pour former l'élément de structure, elles s'imbriquent l'une dans l'autre (voir figure 8) pour former ainsi un ensemble cohérant. On remarquera que dans le même but, les axes 13 sont prolongés d'un côté de chaque chaîne sur une distance 16 égale à l'intervalle 15, majoré d'une très faible longueur, dont déborde l'axe de l'autre côté de la chaîne.

Par ailleurs, les axes 13 dépassent également d'une faible distance la face latérale opposée de chaque chaîne pour former des organes de guidage 17 dont le but apparaîtra par la suite.

Lorsque l'élément de structure est dans sa forme non assemblée, les chaînes 10 et 11 présentent une souplesse orientée en ce sens que leurs maillons sont librement articulés autour des axes 13. Cependant, les axes 13 sont chaque fois axialement bloqués dans des trous alignés respectifs des deux plaquettes d'un même maillon. En considérant la figure 5 (partie de gauche), les plaquettes 14-A et 14a-A du maillon sont solidaires en rotation de l'axe 13-A de ce maillon, alors que ces mêmes plaquettes tournent librement autour de l'axe 13-B du maillon B dont les plaquettes 14-B et 14a-B sont solidaires en rotation de l'axe 13-B, ainsi de suite sur toute la longueur de la chaîne.

Cela signifie que chaque chaîne peut être enroulée autour d'un tambour dont l'axe de rotation est parallèle aux axes 13. Il est donc aisé d'escamoter les deux chaînes dans un encombrement réduit dont la dimension perpendiculaire aux axes des chaînes est faible par rapport à la longueur de l'élément de structure, lorsque celui-ci est dans sa configuration assemblée.

Celle-ci peut facilement être obtenue à la main en crochetant progressivement les maillons des chaînes 10 et 11 l'une à l'autre, tout en les imbriquant comme représenté à la figure 8. Dans cette configuration, l'élément de structure présente une grande solidité et devient quasiment une poutre monobloc. Les charges pouvant être supportées par cet élément sont évidement fonction des matériaux utilisés et des dimensionnements des pièces. D'ailleurs, la solidité peut facilement être augmenter en prévoyant des maillons formés d'une pluralité de plaquettes parallèles dont les écartements sont choisis pour obtenir une imbrication des deux chaînes à la manière illustrée sur la figure 8.

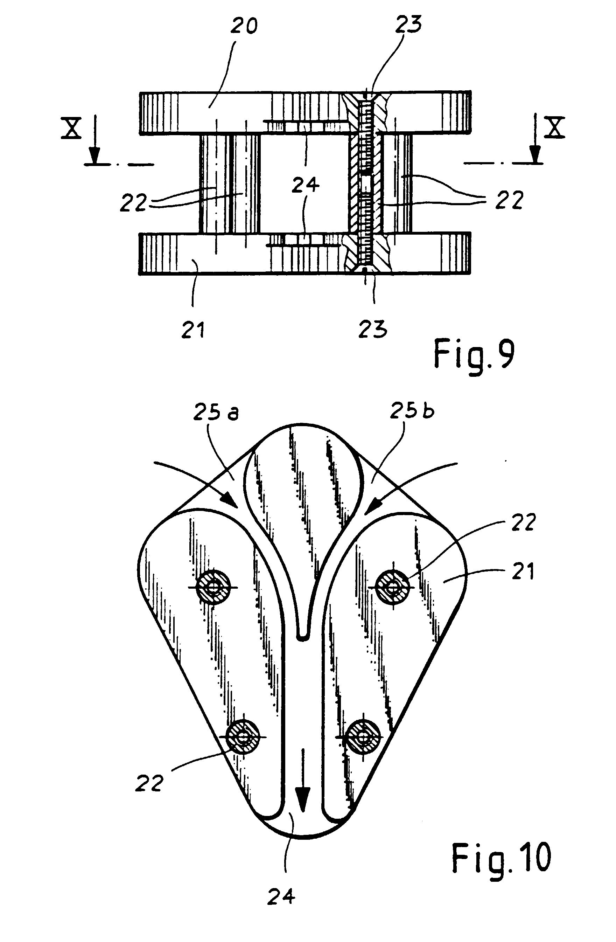

Pour faciliter l'opération d'assemblage, il est possible d'employer un outil d'assemblage dont un mode de réalisation a été représenté sur les figures 9 et 10.

L'outil d'assemblage comprend deux flasques 20 et 21 entretoisés par quatre colonnettes 22 et fixés l'un à l'autre par des vis 23. Les faces en regard des deux flasques 20 et 21 présentent chacune un couloir de guidage 24 dans lequel aboutissent de part et d'autre deux couloirs de jonction 25a et 25b. Ces couloirs sont destinés à guider les extrémités 17 des axes des deux chaînes 10 et 11 composant l'élément de structure suivant le mode de réalisation préféré des figures 3 à 8.

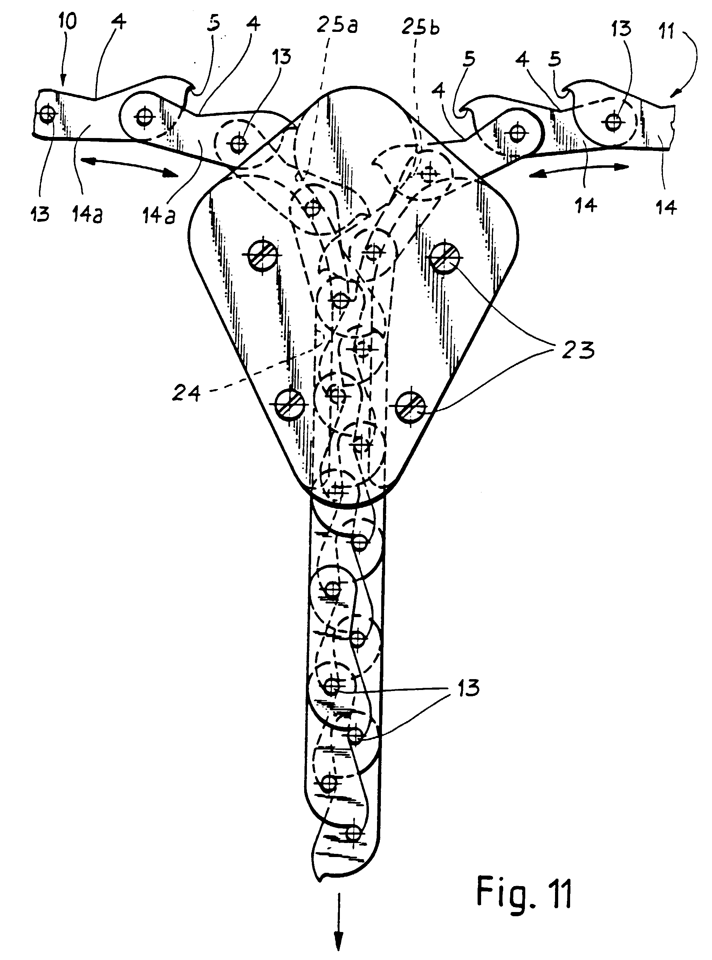

La figure 11 illustre comment l'assemblage est réalisé à l'aide de l'outil des figures 9 et 10. Les deux chaînes 10 et 11 sont introduites entre les flasques 20 et 21, les faces extérieures des plaquettes extérieures de leurs maillons venant glisser sur les faces en regard des flasques 20 et 21. Les axes des maillons sont alors guidés dans les couloirs 25a et 25b (respectivement pour ce qui concerne les chaînes 10 et 11), puis après assemblage dans le couloir de guidage commun 24.

Pendant le mouvement relatif des chaînes 10 et 11, d'une part, et de l'outil d'assemblage, d'autre part, les maillons des chaînes sont progressivement accrochés les uns aux autres, de sorte qu'à la sortie de l'outil, l'élément de structure devient une poutre rigide.

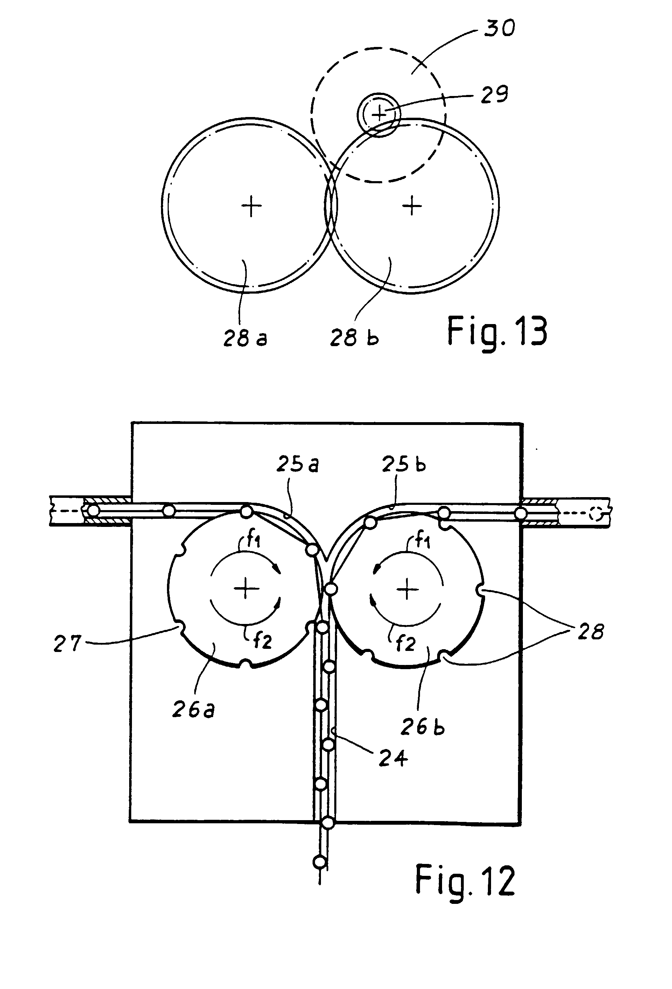

Les figures 12 et 13 montrent par des schémas de principe comment l'opération d'assemblage et de désassemblage de l'élément de structure peut être réalisée.

Sur la figure 12, il s'agit d'un ensemble conçu de par son principe, de façon analogue à l'outil des figures 9 et 10. Cependant, dans ce cas, les couloirs 24 et 25a, 25b sont flanqués de roues à chaîne 26a et 26b dont les indentations 27 sont destinées à venir en prise avec les extrémités 17 des axes 13 des chaînes à maillons 10 et 11.

En faisant tourner les roues à chaîne 26a et 26b dans un sens ou dans l'autre, on peut ainsi obtenir l'assemblage (flèche f1) ou le désassemblage (flèche f2) de l'élément de structure.

La figure 13 montre un exemple de motorisation de ce dispositif d'assemblage. Chaque roue à chaîne 26a, 26b est solidaire en rotation d'une roue dentée 28a, 28b qui engrènent l'une avec l'autre et avec un pignon moteur 29 couplé à un moteur 30. Bien entendu, on peut également entraîner le pignon 20 à l'aide d'une manivelle.

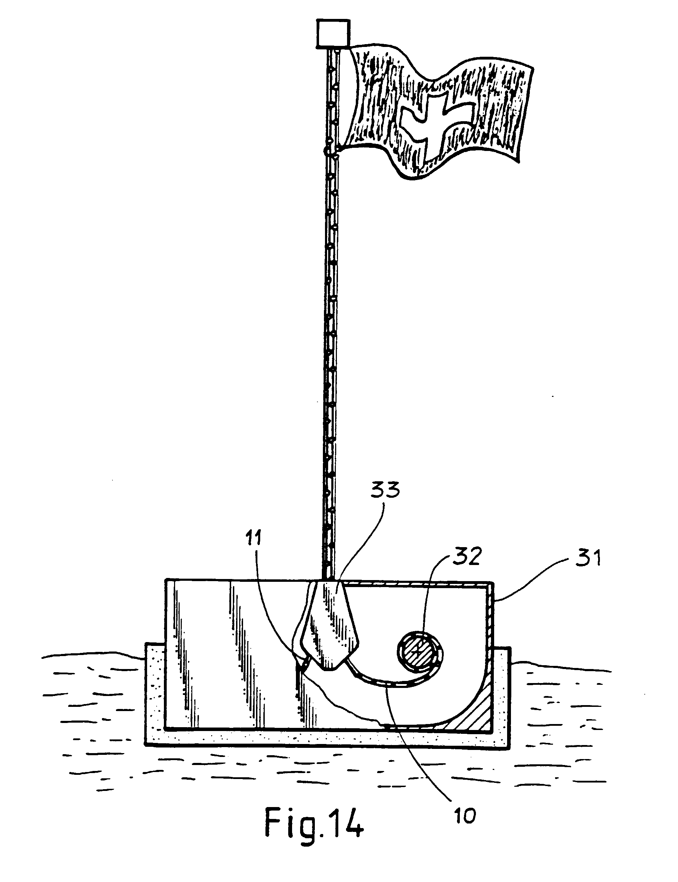

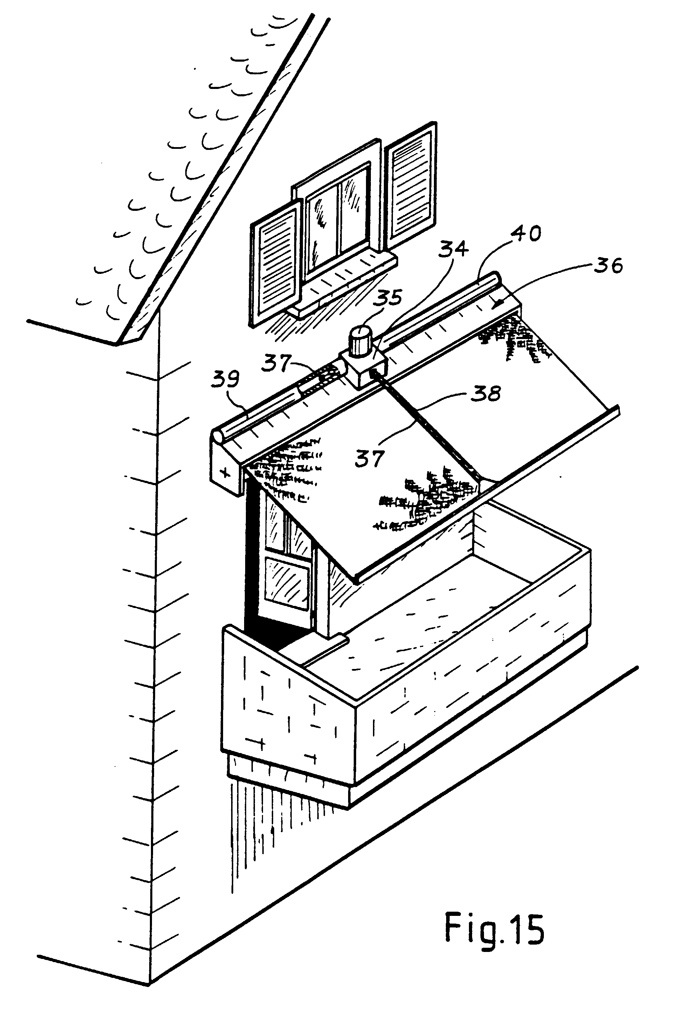

Les figures 14 et 15 représentent schématiquement deux applications de l'invention.

Dans le cas de la figures 14, il s'agit d'une hampe de drapeau qui peut être escamotée dans un caisson 31 logé dans le sol. Le caisson contient deux tambours 32 autour desquels sont enroulés respectivement les chaînes à maillons 10 et 11. Entre les tambours est placé un dispositif d'assemblage 33 analogue à celui représenté à la figure 12 et associé au dispositif moteur représenté sur la figure 13.

La figure 15 montre l'application de l'invention à un store pare-soleil destiné à être monté à la façade d'un immeuble, par exemple. Un dispositif d'assemblage 34 équipé de son dispositif moteur 35 est alors monté au milieu d'une rampe 36 dans laquelle le store peut être enroulé. Les chaînes à maillons 37 et 38 de l'élément de structure sont logées dans des gaines 39 et 40 placées au dessus de la rampe 36. Lorsque le store doit être déroulé, l'élément de structure est assemblé pour former, en sortant du dispositif d'assemblage, une poutre horizontale qui permet de tendre le store. Bien entendu, il suffit d'inverser le sens de rotation du dispositif moteur 35 pour rentrer le store et désassembler l'élément de structure. Il est évident que de nombreuses autres applications de celui-ci sont possibles.

On notera enfin, que la poutre obtenue après assemblage de l'élément de structure n'a pas nécessairement à être rectiligne. On peut, en effet, concevoir un tel élément de structure rigide, mais plus ou moins cintré, ce qui peut être obtenu en choisissant judicieusement des longueurs différentes pour les maillons des chaînes.

## Revendications

1. Elément de structure transformable capable d'assumer une forme de poutre, comprenant une chaîne (1) dont les maillons (... 1n-1, 1n, 1n+1 ...) sont articulés entre eux et comprennent chacun un axe d'articulation (... 2n-1, 2n, 2n+1 ...) et au moins une plaquette de maillon (... 3n-1, 3n, 3n+1 ...), et des moyens (6) pour rigidifier sélectivement les articulations entre les maillons pour transformer l'élément en une structure de poutre, lesdits moyens de rigidification comprenant un lien souple (7) portant une série d'éléments d'accrochage (... 8n-1, 8n, 8n+1 ...) avec un écartement fixe entre eux et ladite plaquette d'un maillon (1n) de ladite chaîne définissant un premier point d'appui (4), cet élément de structure transformable étant caractérisé en ce que ladite plaquette (1n) définit également un deuxième point d'appui (5) antagoniste au premier point d'appui (4), en ce que le premier point d'appui (4) du maillon de rang n coopère avec le deuxième point d'appui (5) du maillon (1n-1) du rang n-1 pour emprisonner un élément d'accrochage (8n) dudit lien souple (7), lorsque l'élément de structure assume sa forme de poutre, et en ce que lesdits axes d'articulation (...2n-1, 2n, 2n+1...) et lesdits éléments d'accrochage (... 8n-1, 8n, 8n+1 ...) sont latéralement accessibles dans une direction perpendiculaire auxdits axes (... 2n-1, 2n, 2n+1 ...) et auxdits éléments d'accrochage (... 8n-1, 8n 8n+1 ...) le long des bords de ladite chaîne (1) et dudit lien souple (7) qui, lorsque l'élément assume sa forme de poutre, sont des bords extérieurs de celle-ci.

2. Elément de structure suivant la revendication 1, caractérisé en ce que les éléments d'accrochage (... 8n-1, 8n, 8n+1 ...) dudit lien souple (7) sont formés par des corps cylindriques dont les axes s'étendent parallèlement aux axes (... 3n-1, 3n, 3n+1 ...) des maillons (... 1n-1, 1n, 1n+1 ...), lorsque l'élément assume sa forme de poutre.

3. Elément suivant l'une quelconque des revendications 1 ou 2, caractérisé en ce que ledit premier point d'appui (4) est ménagé dans la plaquette (... 3n-1, 3n, 3n+1 ...) de chaque maillons, par une dépression prévue dans sa tranche, et en ce que ledit second point d'appui (5) est ménagé sur une partie crochue prévue à l'extrémité de chaque plaquette (... 3n-1, 3n, 3n+1 ... ), la partie crochue venant emprisonner l'élément d'accrochage (... 8n-1, 8n, 8n+1 ...) correspondant dudit lien souple (7) pendant l'assemblage de l'élément de structure.

4. Elément de structure suivant l'une quelconque des revendications 1 à 3, caractérisé en ce que ledit lien souple (6) comprend une bande (7) sur laquelle sont fixés de distance en distance lesdits éléments d'accrochage (... 8n-1, 8n, 8n+1 ...).

5. Elément de structure suivant la revendication 4, caractérisé en ce que chaque élément d'accrochage (... 8n-1, 8n, 8n+1 ...) se termine par un flasque radial d'extremité (9) destiné à retenir ladite chaîne (1) latéralement lorsque l'élément de structure assume sa forme en poutre.

6. Elément de structure suivant l'une quelconque des revendications 1, 2 et 3, caractérisé en ce que ledit lien souple (6) est une deuxième chaîne à maillons (11) identique à la première chaîne a maillon (10), et en ce que lesdits éléments d'accrochage du lien souple sont formés par les axes (13) des maillons de cette deuxième chaîne à maillons (11).

7. Elément de structure suivant l'une quelconque des revendications précédentes, caractérisé en ce que chaque maillon de ladite première chaîne à maillons (10) comprend une pluralité de plaquettes (14, 14a) parallèles et montées ensemble sur l'axe (13) de ce maillon.

8. Elément de structure suivant les revendications 6 et 7 prises ensemble, caractérisé en ce que dans chaque maillon de ladite première chaîne (10), lesdites plaquettes sont montées sur leurs axes avec un écartement (15) prédéterminé, en ce que ladite seconde chaîne (11), dont chaque maillon comporte également une pluralité de plaquettes parallèles, espacées l'une de l'autre du même écartement, et en ce que les première et seconde chaînes (10, 11) sont imbriquées dans le sens de la longueur, lorsque l'élément de structure assume sa forme en poutre.

9. Elément de structure suivant l'une quelconque des revendications 6 à 8, caractérisé en ce que les axes de tous les maillons des première et seconde chaînes (10, 11) dépassent latéralement d'un côté de celles-ci pour former des organes de guidage (17).

10. Appareil pour assembler et désassembler un élément de structure suivant l'une quelconque des revendications 1 à 9, caractérisé en ce qu'il comprend des moyens de jonction (20 à 23; 33) pour joindre ladite première chaîne à maillons (10) et ledit lien souple (11) et des moyens de guidage (24, 25a, 25b) définis par lesdits moyens de jonction (20 à 28) pour progressivement emprisonner ou libérer chaque élément d'accrochage dudit lien souple par rapport aux premier et second points d'appui (4, 5) de deux maillons consécutifs respectifs de ladite première chaîne (10).

11. Appareil suivant la revendication 10, caractérisé en ce qu'il comprend en outre des moyens de réception (32, 39, 40) placés en amont desdits moyens de jonction (33, 34) et destinés à recevoir ladite première chaîne (10) et ledit lien souple (11), lorsque l'élément de structure assume sa configuration souple.

12. Appareil suivant l'une quelconque des revendications 10 et 11, caractérisé en ce qu'il comprend également des moyens moteurs (28, 29, 30) couplés à ladite chaîne (10) et audit lien souple (11) pour assurer leur assemblage et désassemblage automatiques.

13. Appareil suivant la revendication 12 pour un élément de structure tel que défini dans l'une quelconque des revendications 6 à 9, caractérisé en ce que lesdits moyens moteurs comprennent un moteur d'entraînement (30) et des roues d'entraînement dentées (27, 28) couplées à ce moteur et engrènant respectivement avec les première et seconde chaînes (10, 11) dudit élément de structure.

## Patentansprüche

1. Verwandelbares Gefügeelement, welches die Form eines Trägers annehmen kann, welches eine Kette (1) umfaßt, deren Glieder (... 1n-1, 1n, 1n+1 ...) untereinander gelenkig in Verbindung stehen und deren jedes eine Gelenkachse (...2n-1, 2n, 2n+1 ...) und wenigstens eine Gliedplatte (... 3n-1, 3n, 3n+1 ...) aufweist, und wobei Mittel (6) zur wahlweisen Versteifung der Gelenkverbindungen zwischen den Gliedern vorgesehen sind, um das Element in eine Trägerstruktur zu verwandeln, wobei die genannten Versteifungsmittel eine nachgiebige Verbindung (7) umfassen, die eine Reihe von Einhängemitteln (... 8n-1, 8n, 8n+1 ...) aufweist, die einen festen Abstand untereinander aufweisen, wobei die genannte Gliedplatte (1n) der genannten Kette einen ersten Unterstützungspunkt (4) bildet, wobei das verwandelbare Gefügeelement dadurch gekennzeichnet ist, daß die genannte Platte (1n) gleichermaßen einen zweiten Unterstützungspunkt (5) bildet, der dem ersten Unterstützungspunkt (4) entgegengerichtet angeordnet ist, daß der erste Unterstützungspunkt (4) des Gliedes mit dem Rang n mit dem zweiten Unterstützungspunkt (5) des Gliedes (1n-1) des Ranges (n-1) dahingehend zusammenwirkt, um ein Einhängelement (8n) der genannten nachgiebigen Verbindung (7) aufzunehmen, sobald das Gefügeelement seine Trägerform annimmt und daß die genannten Gelenkachsen (... 2n-1, 2n, 2n+1 ...) und die genannten Einhängemittel (... 8n-1, 8n, 8n+1 ...) seitlich in einer vertikalen Richtung zu den genannten Achsen (... 2n-1, 2n, 2n+1 ...) und den genannten Einhängemitteln (... 8n-1, 8n, 8n+1 ...) entlang der Berandungen der genannten Kette (1) und der genannten nachgiebigen Verbindung (7) zugänglich sind, die, sobald das Element seine Form eines Trägers annimmt, die äußeren Berandungen desselben bilden.

2. Gefügeelement nach Anspruch 1, dadurch gekennzeichnet, daß die Einhängemittel (... 8n-1, 8n, 8n+1 ...) der genannten nachgiebigen Verbindung (7) durch zylindrische Körper gebildet werden, deren Achsen sich parallel zu den Achsen (... 3n-1, 3n, 3n+1 ...) der Glieder (... 1n-1, 1n, 1n+1 ...) erstrecken, wenn das Element seine Form eines Trägers annimmt.

3. Gefügeelement nach einem der Ansprüche 1 oder 2, dadurch gekennzeichnet, daß sich der genannte erste Unterstützungspunkt (4) in der Platte (... 3n-1, 3n, 3n+1 ...) eines jeden Gliedes befindet und durch eine in dessen Rand vorgesehene Einformung gebildet wird und daß der genannte zweite Unterstützungspunkt (5) auf einem hakenartigen Teil angebracht ist, welches sich am Ende einer jeden Platte (... 3n-1 , 3n, 3n+1 ...) befindet, wobei das hakenartige Teil während der Montage des Gefügeelements das entsprechende Einhängeelement (... 8n-1, 8n, 8n+1 ...) der genannten nachgiebigen Verbindung (7) aufnimmt.

4. Gefügeelement nach einem der Ansprüche 1 bis 3, dadurch gekennzeichnet, daß die genannte nachgiebige Verbindung (6) aus einem Band (7) besteht, auf welchem unter gleichen Abständen die genannten Einhängeelemente (... 8n-1, 8n, 8n+1 ...) voneinander beabstandet angeordnet sind.

5. Gefügeelement nach Anspruch 4, dadurch gekennzeichnet, daß jedes Einhängeelement (... 8n-1, 8n, 8n+1 ...) in einer sich radial erstreckenden Endscheibe (9) endet, welche zur seitlichen Fixierung der genannten Kette (1) bestimmt ist, wenn das Gefügeelement seine Form eines Trägers annimmt.

6. Gefügeelement nach einem der Ansprüche 1, 2 und 3, dadurch gekennzeichnet, daß die genannte nachgiebige Verbindung (6) eine zweite Gliederkette (11) ist, die mit der ersten Gliederkette (10) identisch ist und daß die genannten Einhängeelemente der nachgiebigen Verbindung durch Achsen (13) der Glieder dieser zweiten Gliederkette (11) gebildet werden.

7. Gefügeelement nach einem der vorangegangenen Ansprüche, dadurch gekennzeichnet, daß jedes Glied der genannten ersten Gliederkette (10) aus einer Vielzahl von Platten (14,14a) besteht, die parallel zueinander angeordnet sind und sämtlich auf der Achse (13) dieses Gliedes angeordnet sind.

8. Gefügeelement nach den zusammengefaßten Ansprüchen 6 und 7, dadurch gekennzeichnet, daß bei jedem Glied der genannten ersten Kette (10) die genannten Platten unter Belassung eines vorherbestimmten Zwischenraumes (15) auf ihren Achsen angeordnet sind, daß bei der genannten zweite Kette (11). jedes Glied gleichermaßen aus einer Vielzahl von zueinander parallelen Platten besteht, die unter Belassung des gleichen Zwischenraumes voneinander beabstandet sind und daß die ersten und zweiten Ketten (10,11) in Längsrichtung miteinander verhakt sind, wenn das Gefügeelement seine Form eines Trägers annimmt.

9. Gefügeelement nach einem der Ansprüche 6 bis 8, dadurch gekennzeichnet, daß die Achsen aller Glieder der ersten und zweiten Ketten (10,11) seitlich zwecks Bildung von Führungsorganen (17) aus einer Seite derselben herausragen.

10. Vorrichtung zur Montage und Demontage eines Gefügeelements nach einem der Ansprüche 1 bis 9, dadurch gekennzeichnet, daß dieses Mittel zur Verbindung (20 bis 23; 33) umfaßt, um die genannte erste Gliederkette (10) und die genannte nachgiebige Verbindung (11) und Führungsmittel (24,25a,25b) miteinander in Verbindung zu bringen, die durch die genannten Verbindungsmittel (20 bis 28) gebildet werden, um in zunehmender Weise jedes Einhängeelement der genannten nachgiebigen Verbindung mit Bezug auf die ersten und zweiten Unterstützungspunkte (4,5) jeweils zweier aufeinander folgender Glieder der genannten ersten Kette (10) aufzunehmen oder zu lösen.

11. Vorrichtung nach Anspruch 10, dadurch gekennzeichnet, daß sie ferner Aufnahmemittel (32,39,40) umfaßt, die oberhalb der genannten Verbindungsmittel (33,34) angeordnet sind und dazu bestimmt sind, die genannte erste Kette (10) und die genannte nachgiebige Verbindung (11) aufzunehmen, wenn das Gefügeelement seine nachgiebige Gestalt annimmt.

12. Vorrichtung nach einem der Ansprüche 10 oder 11, dadurch gekennzeichnet, daß es gleichermaßen Antriebsmittel (28,29,30) umfaßt, die mit der genannten Kette (10) und der genannten nachgiebigen Verbindung (11) gekuppelt sind, um ihre automatische Montage und Demontage sicherzustellen.

13. Vorrichtung nach Anspruch 12 für ein in einem der Ansprüche 6 bis 9 definiertes Gefügeelement, dadurch gekennzeichnet, daß die genannten Antriebsmittel aus einem Antriebsmotor (30) und Antriebszahnrädern (27,28) bestehen, die mit dem Motor gekuppelt sind und jeweils mit den ersten und zweiten Ketten (10,11) des genannten Gefügeelements im Eingriff stehen.

## Claims

1. A transformable structural element capable of assuming the shape of a beam which comprises a chain, the links of which (... 1n-1, 1n, 1n + 1 ...) are articulated together and each comprise a hinge pin (... 2n-1, 2n, 2n +1 ...) and at least one link plate (... 3n-1, 3n, 3n+1 ...), and means (6) to selectively stiffen the articulations between the links to transform it into a beam-like structure, said means for rendering rigid comprising a flexible connection (7) having a series of locking elements (... 8n-1, 8n, 8n+1 ...) with a fixed distance therebetween and where the plate of one link (1n) of said chain defines a first support point (4), said transformable structural element being characterized in that said plate (1n) also defines a second support point (5) opposing the first support point (4), in that the first support point (4) of the link of row n cooperates with the second support point (5) of the link (1n-1) of row n-1 to contain a locking element (8n) of said flexible connection (7) when the structural element assumes its beam-like shape, and in that said hinge pins (...2n-1, 2n, 2n+1 ...) and said locking elements (... 8n-1, 8n, 8n+1 ...) are laterally accessible in a direction perpendicular to said pins (... 2n-1, 2n, 2n+1 ...) and to said locking elements (... 8n-1, 8n, 8n + ...), lengthwise the edges of said chain (1) and said flexible connection (7), said edges when the element assumes its beam-like structure, being the outer edges thereof.

2. A structural element according to Claim 1, characterized in that the locking elements (... 8n-1, 8n, 8n+1 ...) of said flexible connection (7) are formed by cylindrical bodies, the pins of which extend parallel to the pins (... 3n-1, 3n, 3n+1 ...) of the links (... 1n-1, 1n, 1n+1 ...) when the element assumes its beam-like shape.

3. An element according to anyone of claims 1 and 2, characterized in that said first support point (4) is disposed in the plate (... 3n-1, 3n, 3n+1 ...) of each link by a depression provided in its edge and where said second support point (5) is disposed on a hooked part provided at the extremity of each plate (... 3n-1, 3n, 3n+1 ...), the hooked part containing the locking element (... 8n-1, 8n, 8n+1 ...) corresponding to said flexible connection (7) during assembly of the structural element.

4. A structural element according to anyone of claims 1-3, characterized in that said flexible connection (6) comprises a band (7) to which said locking elements (... 8n-1, 8n, 8n+1 ...) are fixed at different points.

5. A structural element according to Claim 4, characterized in that each locking element (... 8n-1, 8n, 8n+1 ...) terminates in an outer radial flange (9) adapted to retain said chain (1) laterally when the structural element assumes its beam-like shape.

6. A structural element according to anyone of claims 1, 2 and 3, characterized in that said flexible connection (6) is a second linked chain (11) identical to the first linked chain (10) and in that said locking elements of the flexible connection are formed by the pins (13) of the links of this second linked chain (11).

7. A structural element according to anyone of the preceding claims, characterized in that each link of said first linked chain (10) comprises a plurality of parallel plates (14, 14a) mounted together on the pin (13) of this link.

8. A structural element according to claims 6 and 7, taken in combination, characterized in that in each link of said first chain (10), said plates are mounted on their pins at a predetermined distance (15) and in that in said second chain (11), each link also has a plurality of parallel plates spaced at the same distance from another, and in that the first and second chains (10, 11) ) are interleaved lengthwise when the structural element assumes its beam-like shape.

9. A structural element according to anyone of claims 6-8, characterized in that the pins of all the links of the first and second chains (10, 11) project laterally on one side thereof to form guide members (17).

10. An apparatus for assembling and disassembling a structural element according to anyone of claims 1-9, characterized in that it comprises joining means (20-23 ; 33) to join said first linked chain (10) and said flexible connection (11) and guide means (24, 25a, 25b) defined by said junction means (20, 28) to progressively contain or release each locking element of said flexible connection in relation to the first and second support points (4, 5) of two respective consecutive links of said first chain (10).

11. An apparatus according to Claim 10, characterized in that it also comprises receiving means (32, 39, 40) placed upstream of said junction means (33, 34) and designed to receive said first chain (10) and said flexible connection (11) when the structural element assumes its flexible configuration.

12. An apparatus according to anyone of claims 10 and 11, characterized in that it also comprises motor means (28, 29, 30) coupled to said chain (10) and to said flexible connection (11) to ensure their automatic assembly and disassembly.

13. An apparatus according to Claim 12 for a structural element such as defined in anyone of claims 6-9, characterized in that said motor means comprise a drive motor (30) and toothed driving wheels (27, 28) coupled to this motor and meshing with the first and second chains (10, 11) respectively of said structural element.
